# EUROPÄISCHE PATENTSCHRIFT

(11) **EP 1 050 629 B1**
(45) Veröffentlichungstag und Bekanntmachung des Hinweises auf die Patenterteilung: **16.06.2004**
(21) Anmeldenummer: 00108890.5
(22) Anmeldetag: 27.04.2000
(51) Int. Cl.: E02B 8/02, E03F 5/14

(54) **Vorrichtung zum Abscheiden und Herausfördern von Abscheidegut aus einer strömenden Flüssigkeit**
Device for separating and transporting of solid matter from running water
Dispositif pour séparer et transporter des déchets d'eaux courantes

(30) Priorität: 03.05.1999 DE 19920074
(43) Veröffentlichungstag der Anmeldung: 08.11.2000
(73) Patentinhaber: Hans Huber AG Maschinen- und Anlagenbau, D-92334 Berching (DE)
(72) Erfinder: Huber, Hans Georg, 92334 Berching (DE)
(74) Vertreter: Patentanwälte Rehberg + Hüppe

(56) Entgegenhaltungen:
- WO-A-86/07106
- US-A- 1 773 576

## Beschreibung

Die Erfindung betrifft eine Vorrichtung zum Abscheiden und Herausfördern von Abscheidegut aus einer strömenden Flüssigkeit, insbesondere Abwasser, mit den im Oberbegriff des Anspruchs 1 angegebenen Merkmalen. Solche Vorrichtungen werden manchmal auch als Stufenrechen bezeichnet. Sie werden in Kläranlagen für kommunale oder industrielle Abwässer eingesetzt, bei der Reinigung von Wasch- oder Prozeßwasser, zum Zwecke der Schlammsiebung oder dgl..

Aus der EP 0 221 991 B1 (WO 86 07 106 A) ist eine Vorrichtung der eingangs beschriebenen Art zum Sammeln und Abgeben von Feststoffen, die von strömendem Wasser mitgenommen werden, bekannt, die einen Satz aus ortsfest angeordneten Lamellen und einen Satz beweglicher Lamellen aufweist. Die feststehenden und die beweglichen Lamellen sind dabei immer abwechselnd zueinander vorgesehen und auf ihrer der ankommenden Strömung zugekehrten Seite mit Stufen versehen. Diese Stufen weisen einen sich im wesentlichen horizontal erstreckenden Trittstufenanteil und einen sich im wesentlichen vertikal erstreckenden Setzstufenanteil auf, so daß die Stufen eine rechteckige Treppenkurve bilden. Die beweglichen Lamellen sind zu einem Lamellenpaket verbunden, welches an zwei Exzenterscheiben aufgehängt ist. Die eine Exzenterscheibe greift direkt an dem beweglichen Lamellenpaket an. Die andere Exzenterscheibe benutzt einen Lenker, um ihren Antrieb auf das bewegliche Lamellenpaket zu übertragen. Die beiden Exzenterscheiben sind getrieblich gekoppelt und bilden einen, eine einzige definierte Kreisbahn aufprägenden Antrieb für das zweite Lamellenpaket in einer entsprechenden geschlossenen Kreisbahn in der Haupterstreckungsebene der Lamellen. Damit wird das bewegliche Lammellenpaket in einer geschlossenen Kreisbahn relativ zu den ortsfest angeordneten Lamellen in Zwangsführung bewegt, und zwar an allen Stellen des beweglichen Lamellenpaketes in der einzigen übereinstimmenden Kreisbahn. Die aufwärtige Bewegungskomponente dieser Kreisbahn ist etwas größer als die Stufenhöhe der feststehenden Lamellen ausgebildet. Die beweglichen Lamellen sind durch Seitenwände zu einer Einheit zusammengefaßt, wobei die Seitenwände gleichzeitig zur Übertragung der kreisförmigen Bewegung und der Kräfte auf diese Lamellen genutzt werden. Die Aufhängung des beweglichen Lamellenpaketes ist aufwendig und erfordert die Verzweigung des Antriebes über zwei Exzenterscheiben und die entsprechende Aufhängung an zwei Stellen.

Die DE 40 01 859 C2 zeigt und beschreibt einen Siebrechen zur Entnahme von festen Bestandteilen aus strömenden Flüssigkeiten. Der Siebrechen weist ein erstes Lamellenpaket aus ortsfest angeordneten Lamellen und ein zweites beweglich angeordnetes Lamellenpaket auf. Sämtliche Lamellen besitzen auf der der Strömungsrichtung zugekehrten Fläche eine Vielzahl von Stufen. Für den Antrieb des beweglichen Lamellenpaketes ist ein Antrieb vorgesehen, der eine einzige definierte geschlossene Kreisbahn zur Verfügung stellt. Diese kreisförmige Bewegung des Antriebes wird unter Zwischenschaltung von Gelenkhebeln auf das bewegliche Lamellenpaket übertragen. Die Gelenkhebel greifen dabei nicht an dem beweglichen Lamellenpaket, sondern an der Aufhängung des Lamellenpaketes an. Die Aufhängung des beweglichen Lamellenpaketes weist zwei Gleitkufen auf, die zunächst unabhängig voneinander und relativbeweglich zueinander in Führungsprofilen geradlinig geführt sind. An jeder Gleitkufe ist ein Schwenklager gebildet, an dem jeweils ein zweiarmiger Hebel schwenkbar vorgesehen ist. Der eine Arm der zweiarmigen Hebel greift gelenkig an dem beweglichen Lamellenpaket an. Der jeweils andere Arm der zweiarmigen Hebel ist über eine Koppelstange gelenkig miteinander verbunden, wobei auch der Anlenkhebel des Antriebes an diesem dem beweglichen Lamellenpaket abgekehrten Gelenk angreift. Durch die voneinander unabhängige geradlinige Führung der beiden Gleitkufen können sich diese relativ zueinander bewegen, wodurch letztlich eine undefinierte Bewegungsbahn des beweglichen Lamellenpaketes entsteht. In einer weiterbildung können die Gleitkufen über ein biegesteifes Element paarweise starr miteinander verbunden sein, wobei dabei die Koppelstangen 18 entfallen können, so daß das bewegliche Lamellenpaket dann lediglich an einfachen, gelenkig zwischen den Gleitkufen und den beweglichen Gitterstäben angreifenden einarmigen Hebeln aufgehängt ist. Auch dabei entsteht eine undefinierte Bewegungsbahn des beweglichen Lamellenpaketes.

Die US-PS 1,773,576 zeigt und beschreibt eine Vorrichtung zum Abscheiden und Herausfördern von Abscheidegut aus einer strömenden Flüssigkeit. Die Vorrichtung weist einen teilweise in die Flüssigkeit eintauchenden Rost aus einem ersten Lamellenpaket aus ortsfest angeordneten Lamellen und einem zweiten beweglich angeordneten Lamellenpaket auf, wobei die Lamellen der Lamellenpakete jeweils abwechselnd über die Breite des Gerinnes vorgesehen sind. Sämtliche Lamellen weisen auf der der Strömungsrichtung zugekehrten Fläche eine Vielzahl von aufeinander abgestimmten Stufen auf. Das bewegliche Lamellenpaket ist an zwei hintereinandergeschalteten Parallelogrammlenkern in ortsfest angeordneten Schwenklagern aufgehängt. Diese Aufhängung wird gleichzeitig benutzt, um Antriebskräfte über die Elemente der Parallelogrammlenker auf das bewegliche Lamellenpaket zu übertragen. Das bewegliche Lamellenpaket wird in einer geschlossenen Bewegungsbahn relativ zu dem ortsfest angeordneten Lamellenpaket bewegt. Für diese Bewegung ist ein Antrieb vorgesehen, der zwei unterschiedliche und aufeinander abgestimmte Bewegungsbahnen bereitstellt. Die eine Bewegungsbahn besteht aus einem Nockentrieb, dessen Bewegung und Kräfte über die beiden Parallelogrammlenker auf das bewegliche Lamellenpaket übertragen werden. Die zweite Bewegungsbahn wird von einem Kurbeltrieb bereitgestellt, dessen Bewegung und Kräfte über zusätzliche Elemente auf das bewegliche Lamellenpaket übertragen werden. Diese zusätzlichen Elemente sind zwischen den beiden hintereinandergeschalteten Parallelogrammlenkern und dem beweglichen Lamellenpaket vorgesehen. Die zusätzlichen Elemente sind teilweise gelenkig, teilweise ausgesteift miteinander verbunden. Damit wird die Aufhängung über die beiden hintereinandergeschalteten Parallelogrammlenker und die zusätzlichen Elemente dazu benutzt, um die beiden Bewegungsbahnen des Antriebes in eine einzige gemeinsame Bewegungsbahn des beweglichen Lamellenpaketes umzuformen.

Aus der EP 0 682 551 B1 ist ein weiterer Rechen zum Entfernen von Partikeln aus Abwasser bekannt, der ein ortsfest angeordnetes Lamellenpaket und ein bewegliches Lamellenpaket aufweist. Es ist ein oberhalb der Wasserströmung angeordneter Antriebsmechanismus vorgesehen, um das bewegliche Lamellenpaket in einem geschlossenen etwa kreisförmigen Bewegungsablauf zu bewegen, wobei dieser Bewegungsablauf eine vertikale Bewegungskomponente einschließt, die die Stufenhöhe der Lamellen überschreitet. Der Antrieb für das bewegliche Lamellenpaket ist so ausgebildet, daß das Lamellenpaket in seinem oberen Bereich exakt auf einer Kreisbahn geführt wird. Dies wird wiederum durch einen Exzenter erreicht. Der Antrieb weist aber auch ein Zugelement mit einem Verbindungsmechanismus auf, der dem unteren Bereich des Lamellenpaketes eine nur angenähert kreisförmige gedrückte Bewegungsbahn erteilt. Durch diese Art des Antriebes erhält das bewegliche Lamellenpaket über die Bauhöhe an jeder Stelle einen unterschiedlichen Bewegungsablauf. Jede Stufe bewegt sich auf einer anderen Bewegungsbahn. Zwar handelt es sich jeweils um eine geschlossene Bahn und auch in etwa um eine Kreisbahn. Die Kreisbahn schließt eine vertikale Bewegungskomponente ein, welche die Stufenhöhe der Lamellen überschreitet. Auch bei dieser Abstimmung der Teile aufeinander wird ein ordnungsgemäßer Transport des Abscheidegutes nach oben nicht erreicht. Die Förderwirkungen sind an den einzelnen Stufen unterschiedlich.

Aus der DE 197 14 089 A1 ist ein Filterstufenrechen mit einem ersten Lamellenpaket aus ortsfest und beabstandet angeordneten Lamellen und einem zweiten Lamellenpaket aus beweglich angeordneten angetriebenen Lamellen bekannt. Sämtliche Lamellen weisen auf der der Strömungsrichtung zugekehrten Fläche eine Vielzahl von Stufen mit einem horizontalen Trittstufenanteil und einem vertikalen Setzstufenanteil auf. Die Stufen weisen keine Hinterschneidungen auf. Der Antrieb für das zweite Lamellenpaket erfolgt in einer geschlossenen Bewegungsbahn in der Haupterstrekkungsebene der Lamellen, wobei die aufwärts gerichtete Bewegungskomponente der Bewegungsbahn etwas größer als die vertikale Höhe der Stufen der Lamellen bemessen ist. Der Antrieb weist zwei unabhängig voneinander steuerbare Stellantriebe auf, die das bewegliche Lamellenpaket in zwei verschiedenen Verstellrichtungen antreiben. Damit wird die Verstellung des beweglichen Lamellenpaketes variabler und somit vielfältiger einsetzbar. Die Bewegungsbahn umschließt eine Fläche und wird in im wesentlichen lineare Bewegungsabschnitte aufgeteilt, die vorzugsweise vertikal und linear ausgerichtet sind. Auch die Stellantriebe sind vertikal und horizontal ausgerichtet angeordnet. Die kreisförmige Bewegung aus dem Stand der Technik wird also durch eine rechteckige Bewegung ersetzt.

Der vorliegenden Erfindung liegt daher das technische Problem zugrunde, eine Vorrichtung der eingangs beschriebenen Art bereitzustellen, bei der das bewegliche Lamellenpaket so aufgehängt und geführt ist, daß ein einziger Antrieb, der also eine einzige, beliebig gestaltete, aber definierte Bewegungsbahn bereitstellt, genügt, um trotzdem eine, insbesondere auch kreisbogenförmige, entsprechende Bewegungsbahn an allen Stellen des beweglichen Lamellenpaketes entstehen zu lassen.

Erfindungsgemäß wird dieses technische Problem durch die Merkmale des Patentanspruchs 1 gelöst.

Die Erfindung geht von dem Gedanken aus, das bewegliche Lamellenpaket in besonderer Weise aufzuhängen, so daß es nur parallel zu sich selbst bewegt werden kann. Dies geschieht über zwei hintereinander geschaltete Parallelogrammlenker. Es ist ein erstes Paar von Parallelogrammlenkern vorgesehen, die einerseits in ortsfest angeordneten Schwenklagern aufgehängt sind, gleiche Länge besitzen und vorzugsweise an ihren Enden zwei Gelenke tragen, die über eine Koppelstange verbunden sind. Die vier Gelenkpunkte werden damit von einem Parallelogramm aufgespannt, und die Koppelstange kann nur parallel zu sich selbst in einer Kreisbahn um die ortsfesten Lager bewegt werden. An dieser Koppelstange, den beiden ersten Parallelogrammlenkern oder aber auch in den beweglichen Schwenklagern der ersten Parallelogrammlenker wird ein zweites Paar von Parallelogrammlenkern aufgehängt, die untereinander wiederum gleiche Länge aufweisen müssen. Die Länge der zweiten Parallelogrammlenker kann aber durchaus unterschiedlich zu der Länge der ersten Parallelogrammlenker sein. Auch die zweiten Parallelogrammlenker besitzen vier Gelenkpunkte, die parallelogrammartig verteilt angeordnet und miteinander verbunden sind. Die beiden ersten Gelenkpunkte werden dabei über die Koppelstange verbunden. Die beiden zweiten Gelenkpunkte werden durch das bewegliche Lamellenpaket verbunden. Das bewegliche Lamellenpaket bildet damit gleichsam die zweite Koppelstange. Die beiden hintereinandergeschalteten Parallelogrammlenker können auch als Doppelparallelogrammlenker bezeichnet werden. Durch diese doppelte Parallelogrammaufhängung ist sichergestellt, daß das bewegliche Lamellenpaket nur parallel zu sich selbst bewegt werden kann. Hieraus resultiert, daß jede Stufe an jeder Stelle des beweglichen Lamellenpaketes in der gleichen übereinstimmenden Bewegungsbahn geführt wird, so daß die Förderbedingungen an allen Stellen der Vorrichtungen übereinstimmen. Andererseits erlaubt es aber diese Aufhängung, dem Lamellenpaket jede gewünschte Bewegungsbahn zu geben. Dies schließt die relativ einfach aufzubringende Kreisbahn wie auch elipsenartige oder elipsenförmige Bewegungsbahnen ein. Auch Rechteckbahnen können erzeugt werden. Welche Bewegungsbahn verwirklicht wird, ist nur noch von der Bewegung des Antriebes abhängig. Es genügt ein einziger Antrieb, der an dem bewegten Lamellenpaket direkt angreift, um diese eine gewünschte Bewegungsbahn von dem kAntrieb auf alle Stellen des beweglichen Lamellenpaketes zu übertragen. Eine Aufteilung des Antriebes in zwei Exzenterscheiben oder das Einsetzen und Aufeinanderabstimmen zweier unterschiedlicher Antriebe ist nicht mehr erforderlich. Mit der neuen Aufhängung wird gleichsam eine Universalaufhängung des beweglichen Lamellenpaketes geschaffen. Dieser Teil der Vorrichtung kann mit Antrieben, die unterschiedliche Bewegungsbahnen aufweisen bzw. vermitteln, kombiniert werden, so daß auch relativ komplizierte Bewegungsbahnen verwirklichbar sind. Dabei tritt immer der Vorteil auf, daß jede Stufe der Vorrichtung in einer zueinander parallelen, jedoch identische Bewegungskomponenten aufweisenden Bahn geführt wird.

Für die Realisierung des einzigen Antriebes ergeben sich verschiedene Möglichkeiten. Besonders einfach ist es, wenn der einzige Antrieb als Kurbeltrieb ausgebildet ist. Ein solcher Kurbeltrieb weist eine kreisförmige Bewegungsbahn auf und bestimmt damit die kreisförmige Bewegungsbahn des beweglichen Lamellenpaketes. Ein solcher Antrieb ist dann besonders vorteilhaft, wenn das feststehende Lamellenpaket und das bewegliche Lamellenpaket in einem Winkel von etwa 45° geneigt angeordnet wird und der Trittstufenanteil sowie der Setzstufenanteil der Stufen zumindest in etwa übereinstimmt. Ein solcher Kurbeltrieb läßt sich auch recht einfach realisieren, beispielsweise durch einen Elektromotor mit einer angeflanschten Nockenscheibe, einem Dreharm o. dgl.. Eine andere Möglichkeit besteht darin, daß der einzige Antrieb als Kurvenbahnantrieb ausgebildet ist. Damit lassen sich von der kreisförmigen Bewegung abweichende Bewegungsbahnen realisieren, insbesondere eliptische oder elipsenartige Bewegungsbahnen, die dann auch so angeordnet und ausgerichtet werden, daß die aufwärtsgerichtete Förderkomponente der Bewegungsbahn, die größer als der Setzstufenanteil der Stufen sein muß, auf die Form der Stufen abgestimmt wird. Damit wird die Hauptachse der elipsenartigen Bewegung relativ zur Vertikalen ausgerichtet. Selbstverständlich kann die vorrichtung auch in einem von 45 ° abweichenden Winkel geneigt in ein Gerinne eingestellt werden, beispielsweise in einem Winkelbereich von 40 bis 80 °. Dabei können die Trittstufenanteile anders als die Setzstufenanteile bemessen sein.

Vorteilhaft ist es, wenn die beiden ersten Parallelogrammlenker über eine an ihren schwenkbaren Enden angreifende Koppelstange miteinander verbunden sind. Natürlich könnte die Koppelstange auch an anderer Stelle die beiden ersten Parallelogrammlenker verbinden. Die beiden an der Koppelstange ohnehin erforderlichen Schwenklager können jedoch so unter Ausnutzung der vollen Länge der beiden ersten Parallelogrammlenker plaziert werden. Auch besteht in diesem Zusammenhang die Möglichkeit, daß die beiden ersten Parallelogrammlenker mit den beiden zweiten Parallelogrammlenkern über gemeinsame Gelenke verbunden sind. Die gemeinsamen Gelenke erfüllen dabei eine Mehrfachfunktion, und die gesamte Aufhängung wird besonders einfach.

Der einzige Antrieb kann direkt an dem beweglichen Lamellenpaket angreifen, beispielsweise an Fortsätzen, die an einzelnen Lamellen vorgesehen sind. Es kann sich auch um die Seitenwände des beweglichen Lamellenpaketes handeln. Eine weitere Möglichkeit besteht darin, daß der einzige Antrieb an einem der beiden zweiten Parallelogrammlenkern und damit indirekt an dem beweglichen Lamellenpaket angreifend vorgesehen ist. Damit entfällt die Anordnung von Verlängerungen, Vorsprüngen o. dgl. an einzelnen Lamellen des Lamellenpaketes. Der Antrieb greift direkt in dem Schwenklager an, welches an einem der beiden zweiten Parallelogrammlenker gebildet wird.

Es versteht sich, daß die Parallelogrammlenker jeder Parallelogrammaufhängung untereinander gleiche Länge aufweisen müssen. Es ist aber auch möglich, daß die beiden ersten und die beiden zweiten Parallelogrammlenker gleiche Länge aufweisen. Wenn die beiden zweiten Parallelogrammlenker über das bewegliche Lamellenpaket miteinander verbunden sind, entfällt die gesonderte Anordnung einer Koppelstange für die beiden zweiten Parallelogrammlenker.

Die Stufen können gleich groß ausgebildete Trittstufenanteile und Setzstufenanteile aufweisen. Die Lamellenpakete können in einem Winkel von 45° geneigt angeordnet sein. Diese Ausbildung ist besonders sinnvoll in Verbindung mit einer kreisförmigen Bewegungsbahn.

Die Erfindung wird anhand einiger bevorzugter Ausführungsbeispiele weiter erläutert und beschrieben. Es zeigen:
- Fig. 1: eine schematisierte Seitenansicht der Vorrichtung,
- Fig. 2: eine Seitenansicht einer Aufhängung des beweglichen Lamellenpaketes und die zugehörige Bewegungsbahn,
- Fig. 3: eine Seitenansicht einer anderen Aufhängung und die zugehörige Bewegungsbahn,
- Fig. 4: eine ähnlich Darstellung wie Fig. 3, jedoch mit der Darstellung einer ellipsenförmigen oder ellipsenartigen Bewegungsbahn, und
- Fig. 5: eine Seitenansicht einer weiteren Ausführungsform.

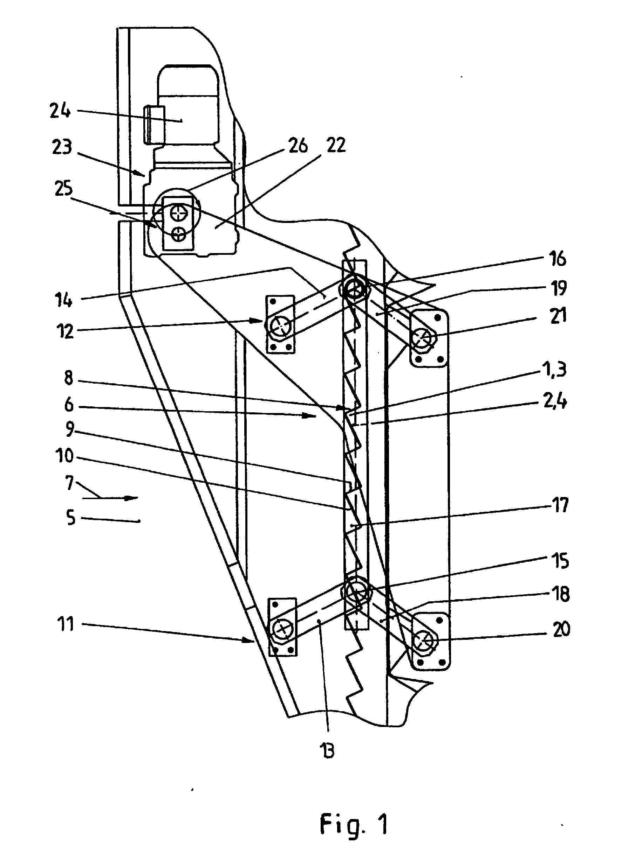

Fig. 1 zeigt eine Seitenansicht einer ortsfesten Lamelle 1. Stufenrechen der in Rede stehenden Art besitzen eine Anzahl solcher ortsfester Lamellen 1, die auf gegenseitigem Abstand, also senkrecht zur Zeichenebene der Fig. 1, sich mit ihren Umrissen deckend angeordnet sind. Zwischen zwei ortsfesten Lamellen 1 befindet sich jeweils eine bewegliche Lamelle 2. Auch die Umrisse dieser beweglichen Lamellen 2 decken sich in der dargestellten Ausgangsstellung gemäß Fig. 1 mit den Umrissen der ortsfesten Lamellen 1. Die ortsfesten Lamellen 1 sind untereinander zu einem Lamellenpaket 3 zusammengefaßt. Die beweglichen Lamellen 2 sind zu einem zweiten Lamellenpaket 4 zusammengefaßt. Das Lamellenpaket 4 und damit die beweglichen Lamellen 2 werden beim Antrieb des Stufenrechens parallel zu ihrer Haupterstreckungsebene, also in parallelen Ebenen zur Zeichenebene der Fig. 1 bewegt. Die beiden Lamellenpakete 3 und 4 bilden insgesamt einen in die Flüssigkeit 5 eintauchenden schräg gestellt angeordneten Rost 6. Die Strömungsrichtung 7 der Flüssigkeit 5 relativ zum Rost 6 ist durch einen Pfeil angedeutet.

Die Lamellen 1 und 2 sind auf ihrer der gemäß Strömungsrichtung 7 ankommenden Flüssigkeit 5 zugekehrten Seite mit Stufen 8 versehen. Jede Stufe 8 besitzt einen Trittstufenanteil 9 und einen Setzstufenanteil 10. Der Trittstufenanteil 9 ist hier exakt horizontal angeordnet. Er kann aber auch leicht geneigt entgegen der Strömungsrichtung 7 ansteigend vorgesehen sein. Mit dem Trittstufenanteil 9 wird jedenfalls der Teil der Stufe 8 bezeichnet, der sich im wesentlichen horizontal erstreckt. Entsprechendes gilt für die Setzstufenanteil 10. Der Setzstufenanteil 10 kann sich exakt vertikal erstrecken, wie in Fig. 1 dargestellt. Er kann aber auch geneigt ausgebildet sein. Auch eine geschweifte oder gebogene Formgebung der Stufe 8 im Bereich des Setzstufenanteils 10 ist natürlich möglich. Der Setzstufenanteil 10 bildet mit dem Trittstufenanteil 9 einen Winkel von 90°. Dies ist der Fall, wenn die Stufen 9 rechteckförmig ausgebildet und angeordnet sind. Eine solche Gestaltung der Stufen 8 weist keine Hinterschneidungen auf. Die Stufen 8 können aber auch in der weise gestaltet sein, daß sie Hinterschneidungen aufweisen, und zwar in horizontaler und/oder vertikaler Richtung. Solche Hinterschneidungen sind sinnvoll, um beispielsweise auch größere Gegenstände von Stufe 8 zu Stufe 8 nach oben zu transportieren.

In ortsfest am Rahmen der Vorrichtung angeordneten Schwenklagern 11 und 12 ist eine erste Parallelogrammaufhängung vorgesehen. Diese Parallelogrammaufhängung weist Parallelogrammlenker 13, 14 auf. Die beiden Parallelogrammlenker 13 und 14 besitzen eine übereinstimmende Länge. An ihren schwenkbaren Enden sind Gelenke 15 und 16 gebildet, die durch eine Koppelstange 17 miteinander verbunden sind. Die Entfernung der Gelenke 15 und 16 voneinander und damit die wirksame Länge der Koppelstange 17 entspricht der Entfernung der Achsen der Schwenklager 11 und 12.

An dieser ersten Parallelogrammaufhängung hängt eine zweite Parallelogrammaufhängung. Die zweite Parallelogrammaufhängung weist Parallelogrammlenker 18, 19 auf. Die Parallelogrammlenker 18, 19 besitzen die gleiche Länge. Sie sind einerseits in dem Gelenk 15 bzw. 16 aufgehängt und weisen an ihren anderen Enden Gelenke 20, 21 auf. Die Gelenke 20, 21 stellen die Verbindung zu dem beweglichen Lamellenpaket 4 her, d. h. die Gelenke 20, 21 greifen an beweglichen Lamellen 2 des Lamellenpaketes 4 an, in der Regel an den beiden jeweils äußeren Lamellen 2. Diese beiden beweglichen Lamellen 2 können einen vorsprung oder Arm 22 aufweisen, an dem letztendlich ein einziger Antrieb 23 angreift. Der Antrieb 23 kann eine Elektromotor 24 und eine nicht näher dargestellte Kurbel aufweisen. Die Kurbel kann auch als gekröpfte Welle, als Exzenternocken o. dgl. ausgebildet sein. Es ergibt sich somit ein Kurbeltrieb 25.

Durch die besondere Art der Aufhängung werden die beweglichen Lamellen 2 und damit das gesamte Lamellenpaket 4 parallel zu sich selbst geführt. Ohne den Antrieb 23 kann das Lamellenpaket 4 in jeden geometrisch erreichbaren Raumpunkt bewegt werden. Durch einen Kurbelantrieb 25 wird eine kreisförmige geschlossene Bewegungsbahn 26 festgelegt.

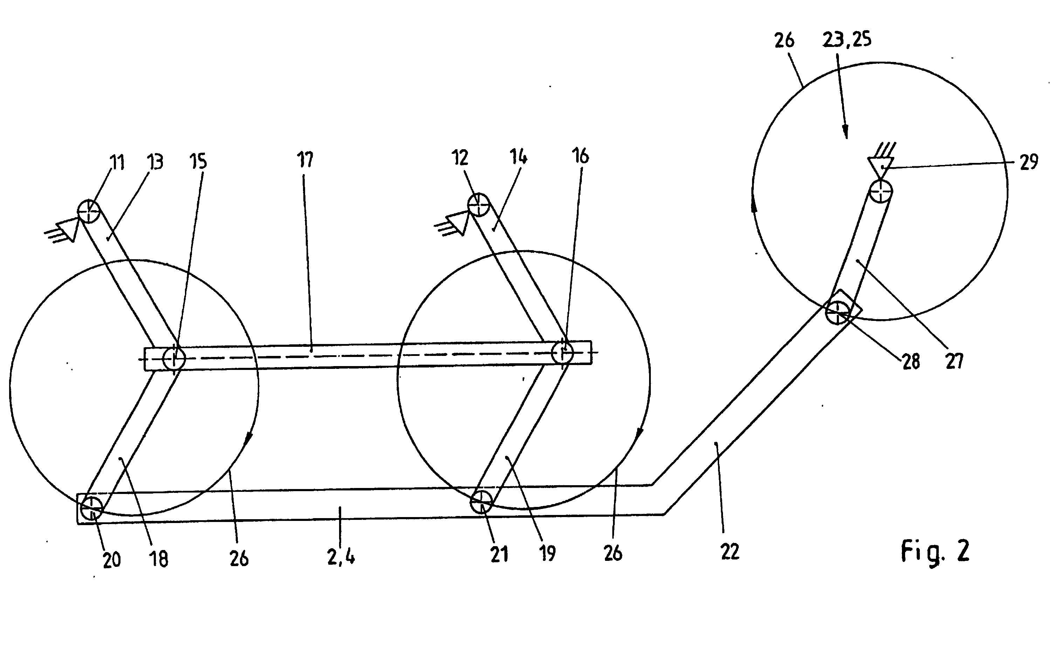

Zur Verdeutlichung sind die Aufhängung und der einzige Antrieb 25 in Fig. 2 noch einmal gesondert dargestellt. Man erkennt, wie letztendlich das aus den beweglichen Lamellen 2 gebildete Lamellenpaket 4 an den zwei Parallelogrammaufhängungen, die hintereinandergeschaltet sind, aufgehängt sind. Die ersten Parallelogrammlenker 13, 14 sind nur über die ortsfesten Schwenklager 11 bzw. 12 kreisförmig verschwenkbar. Auch die Koppelstange 17 wird damit kreisförmig geführt. In den Gelenken 15 und 16 greifen die zweiten Parallelogrammlenker 18 bzw. 19 an. Die erste Parallelogrammaufhängung wird von den parallelogrammartig verteilten bzw. angeordneten Elementen 11, 12, 15, 16 gebildet. Die zweite Parallelogrammaufhängung ergibt sich aus den Elementen 15, 16, 20, 21. Dazu gehören natürlich auch die entsprechenden Längen. Es ist leicht einsehbar, daß die Gelenke 20 und 21 mit dieser Aufhängung im Raum zu jedem erreichbaren Punkt bewegt werden können. Um diese insoweit nicht begrenzte Bewegungsmöglichkeit zu begrenzen, ist der Antrieb 25 vorgesehen. Der Antrieb 25 weist einen Antriebsarm 27 mit einem Nocken 28, Exzenter o. dgl. auf. Der Nocken 28 stellt gleichzeitig ein Schwenklager für den Arm 22 an den beweglichen Lamellen 2 dar. Der Antriebsarm 27 ist in einem ortsfesten Lager 29 gelagert, so daß sich eine kreisförmige Bewegungsbahn 26 ergibt. Der Antrieb 25 überträgt damit die kreisförmige Bewegungsbahn 26 auf die beiden Gelenke 20 und 21, und zwar gleichzeitig und gleichförmig, so daß auch die Gelenke 20 und 21 und damit das bewegliche Lamellenpaket 4 eine Kreisbewegung gemäß den Bewegungsbahnen 26 ausführt.

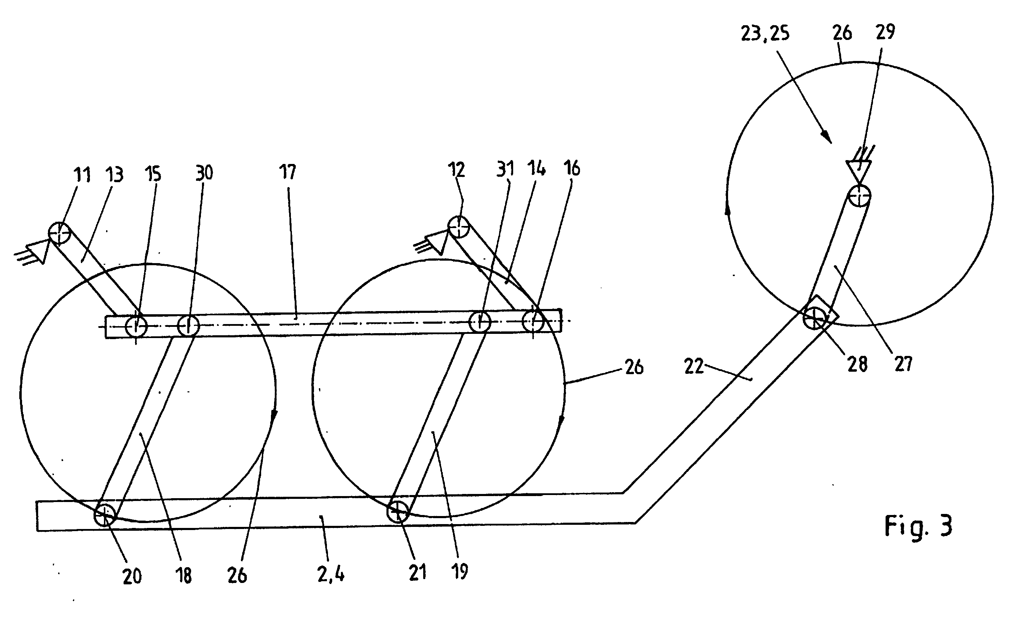

Die Ausführungsform gemäß Fig. 3 stimmt in weiten Bereichen mit der Ausführungsform gemäß Fig. 2 überein. Die Länge der zweiten Parallelogrammlenker 18 und 19 ist untereinander gleich, aber verschieden von der gemeinsamen Länge der Parallelogrammlenker 13 und 14. Auch sind die zweiten Parallelogrammlenker 18 und 19 nicht in den Gelenken 15 und 16, sondern in gesonderten Gelenken 30, 31 auf der Koppelstange 17 angelenkt. Es versteht sich, daß die Punkte 30, 31, 20, 21 auch hier parallelogrammartig verteilt angeordnet sind. Damit ergibt sich auch hier eine kreisförmige Bewegungsbahn 26.

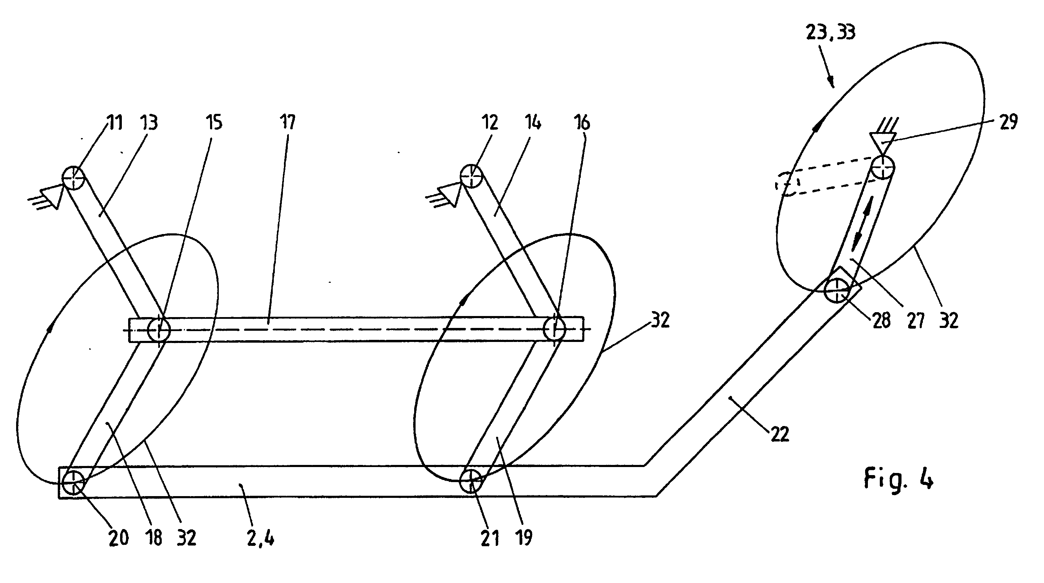

Die in Fig. 4 dargestellte Ausführungsform stimmt hinsichtlich ihrer Aufhängung mit der in Fig. 2 dargestellten Ausführungsform überein. Der Antrieb 25 ist hier jedoch als Kurvenbahnantrieb 33 ausgebildet, d. h. der Nocken 28 wird auf einer eliptischen Bewegungsbahn 32 geführt. Somit ergibt es sich, daß die Gelenke 20, 21 und damit das bewegliche Lamellenpaket 4 an allen Stellen zu sich selbst parallel in einer eliptischen Bewegungsbahn 32 bewegt wird. Die Form der Bewegungsbahn des Antriebes 25 bestimmt die Bewegungsbahn, mit der das bewegliche Lamellenpaket 4 relativ gegenüber dem feststehenden Lamellenpaket 3 bewegt wird. Das bewegliche Lamellenpaket 4 besitzt an jeder Stelle und damit an allen Stufen 4 eine übereinstimmende Bewegung, also über die gesamte Höhe identische Förderbedingungen.

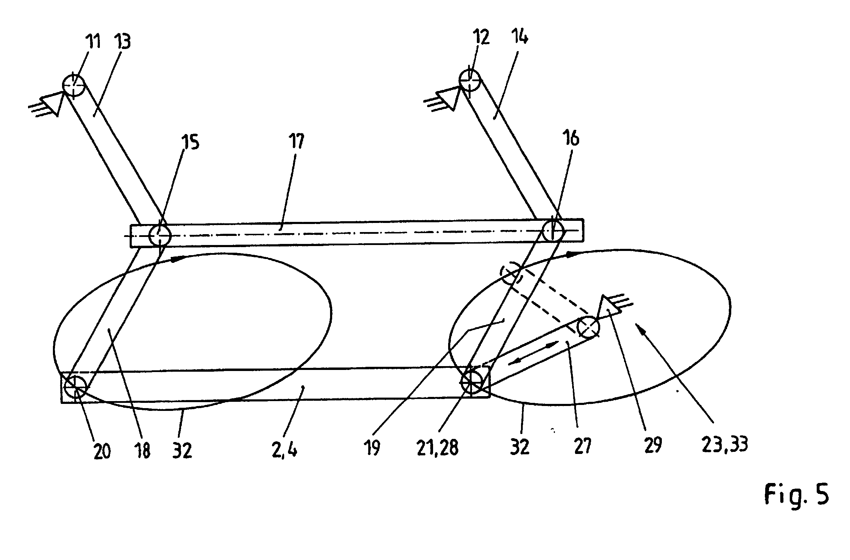

Fig. 5 zeigt eine weitere Ausführungsform der Aufhängung und des Antriebs. Hieraus ist erkennbar, daß der Antrieb 23 auch direkt an dem Lamellenpaket 4 bzw. an dem Gelenk 21 angreifen kann. Der Arm 22 kommt damit in Fortfall. Fig. 5 läßt im Vergleich zu Fig. 4 auch erkennen, daß die Ausrichtung der elipsenförmigen Bewegungsbahn 32 relativ zu der Erstreckung der Lamellen 2 verändert ist. Die große Halbachse der Elipse wird damit ausgenutzt, um die Höhe der Stufe 8 zu überwinden.

### BEZUGSZEICHENLISTE

- 1 -: ortsfeste Lamelle
- 2 -: bewegliche Lamelle
- 3 -: erstes Lamellenpaket
- 4 -: zweites Lamellenpaket
- 5 -: Flüssigkeit
- 6 -: Rost
- 7 -: Strömungsrichtung
- 8 -: Stufe
- 9 -: Trittstufenanteil
- 10 -: Setzstufenanteil

- 11 -: Schwenklager
- 12 -: Schwenklager
- 13 -: Parallelogrammlenker
- 14 -: Parallelogrammlenker
- 15 -: Gelenk
- 16 -: Gelenk
- 17 -: Koppelstange
- 18 -: Parallelogrammlenker
- 19 -: Parallelogrammlenker
- 20 -: Gelenk

- 21 -: Gelenk
- 22 -: Arm
- 23 -: Antrieb
- 24 -: Elektromotor
- 25 -: Kurbeltrieb
- 26 -: Bewegungsbahn
- 27 -: Antriebsarm
- 28 -: Nocken
- 29 -: Lager
- 30 -: Gelenk

- 31 -: Gelenk
- 32 -: Bewegungsbahn
- 33 -: Kurvenbahnantrieb

## Patentansprüche

1. Vorrichtung zum Abscheiden und Herausfördern von Abscheidegut aus einer strömenden Flüssigkeit, insbesondere Abwasser, mit einem in die Flüssigkeit (5) eintauchenden Rost (6) aus parallel zueinander vorgesehenen und jeweils im Wechsel ortsfest und beweglich angeordneten Lamellen (1, 2), wobei die ortsfest angeordneten Lamellen (1) zu einem ersten Lamellenpaket (3) und die beweglich angeordneten Lamellen (2) zu einen zweiten Lamellenpaket (4) zusammengefaßt sind und sämtliche Lamellen (1, 2) auf der der Strömungsrichtung (7) zugekehrten Fläche eine Vielzahl von Stufen (8) aufweisen, und mit einem, eine einzige definierte Bewegungsbahn aufprägenden Antrieb (23) für das zweite Lamellenpaket (4) in einer entsprechenden geschlossenen Bewegungsbahn (26, 32) in der Haupterstreckungsebene der Lamellen (1, 2), wobei die aufwärts gerichtete Bewegungskomponente der Bewegungsbahn (26, 32) etwas größer als die vertikale Höhe der Stufen (8) der Lamellen (1, 2) bemessen ist, wobei das bewegliche Lamellenpaket (4) an zwei hintereinandergeschalteten Parallelogrammlenkern (13, 14; 17; 18, 19) in ortsfest angeordneten Schwenklagern (11, 12) frei aufgehängt ist, **dadurch gekennzeichnet, daß** der einzige Antrieb (23) unter Umgehung der freien Aufhängung an dem beweglichen Lamellenpaket (4) angreifend vorgesehen ist.

2. Vorrichtung nach Anspruch 1, **dadurch gekennzeichnet, daß** der einzige Antrieb (23) als Kurbeltrieb (25) ausgebildet ist.

3. Vorrichtung nach Anspruch 1 oder 2, **dadurch gekennzeichnet, daß** der einzige Antrieb (23) als Kurvenbahnantrieb (33) ausgebildet ist.

4. Vorrichtung nach einem der Ansprüche 1 bis 3, **dadurch gekennzeichnet, daß** die beiden ersten Parallelogrammlenker (13, 14) über eine an ihren schwenkbaren Enden angreifende Koppelstange (17) miteinander verbunden sind.

5. Vorrichtung nach einem der Ansprüche 1 bis 4, **dadurch gekennzeichnet, daß** die beiden ersten Parallelogrammlenker (13, 14) mit den beiden zweiten Parallelogrammlenkern (18, 19) über gemeinsame Gelenke (15, 16) verbunden sind.

6. Vorrichtung nach einem der Ansprüche 1 bis 5, **dadurch gekennzeichnet, daß** der einzige Antrieb (23) an einem der beiden zweiten Parallelogrammlenkern (18, 19) und damit indirekt an dem beweglichen Lamellenpaket (4) angreifend vorgesehen ist.

7. Vorrichtung nach einem der Ansprüche 1 bis 6, **dadurch gekennzeichnet, daß** die beiden ersten und die beiden zweiten Parallelogrammlenker (13, 14; 18, 19) gleiche Länge aufweisen.

8. Vorrichtung nach einem der Ansprüche 1 bis 7, **dadurch gekennzeichnet, daß** die beiden zweiten Parallelogrammlenker (18, 19) über das bewegliche Lamellenpaket (4) miteinander verbunden sind.

9. Vorrichtung nach einem der Ansprüche 1 bis 8, **dadurch gekennzeichnet, daß** die Stufen (8) gleich groß ausgebildete Trittstufenanteile (9) und Setzstufenanteile (10) aufweisen und daß die Lamellenpakete (3, 4) in einem Winkel von 45° geneigt angeordnet sind.

## Claims

1. An apparatus for collecting and removing solid particles from a flowing fluid, especially from waste water, comprising:
a grid unit (6) contacting the fluid (5) to be cleaned and including bars (1, 2) being arranged in parallel, the bars including a plurality of stationary first bars (1) being arranged to form a stationary first bar unit (3), each of the stationary first bars (1) including a plurality of steps (8) facing the flowing direction of the fluid, and a plurality of movable second bars (2) being arranged to form a movable second bar unit (4), each of the movable second bars (2) including a plurality of steps (8) facing the flowing direction of the fluid, the stationary first bars (1) and the movable second bars (2) being arranged side by side to alternate,
a drive (23) being operatively connected to the movable second bar unit (4) to move the movable second bar unit along a closed path of movement (26, 32) extending in the main plane of the bars (1, 2) and having a conveying component of the path of movement (26, 32) being slightly greater than the height of the steps (8) of the bars (1, 2), the movable bar unit (4) is supported in two parallelogram units (13, 14; 17; 18, 19), the first parallelogram unit being connected to stationary bearings (11, 12) and carrying the second parallelogram unit to be freely movable, **wherein** the one single drive (23) is operatively connected to the movable second bar unit (4) bypassing the support to move the movable second bar unit (4) along the closed path of movement.

2. The apparatus of claim 1, **wherein** the one single drive (23) includes a crank mechanism (25).

3. The apparatus of claim 1 or 2, **wherein** the one single drive (23) is designed as a curved path drive (33).

4. The apparatus of one of the claims 1 to 3, **wherein** the first parallelogram unit includes two first parallelogram rods (13, 14) having pivotable end portions being interconnected by a coupling bar (17).

5. The apparatus of one of the claims 1 to 4, **wherein** the two first parallelogram rods (13, 14) of the first parallelogram unit are connected to the two second parallelogram rods (18, 19) of the second parallelogram unit by two common joints (15, 16).

6. The apparatus of one of the claims 1 to 5, **wherein** the one single drive (23) is operatively connected to one of the two second parallelogram rods (18, 19) and thus indirectly acting on the movable second bar unit (4).

7. The apparatus of one of the claims 1 to 6, **wherein** the two first parallelogram rods (13, 14) and the two second parallelogram rods (18, 19) have the same length.

8. The apparatus of one of the claims 1 to 7, **wherein** the two second parallelogram rods (18, 19) are connected to one another by the movable second bar unit (4).

9. The apparatus of one of the claims 1 to 8, **wherein** each of the steps (8) includes a skeleton portion (9) and a rising portion (10) having the same dimensions, and wherein the first and second bar units (3, 4) are arranged to be inclined at an angle of 45 degrees.

## Revendications

1. Dispositif pour séparer et extraire un produit à séparer d'un liquide s'écoulant, en particulier d'eaux usées, comportant une grille (6) plongeant dans le liquide (5) constituée de lamelles (1,2) prévues parallèlement les unes aux autres et disposées chacune alternativement fixes et mobiles, les lamelles (1) disposées fixes étant réunies en un premier paquet de lamelles (3) et les lamelles (2) disposées mobiles étant réunies en un deuxième paquet de lamelles (4) et toutes les lamelles (1, 2) présentant sur la surface tournée vers la direction d'écoulement (7) un grand nombre de gradins (8) et comportant un dispositif d'entraînement (23) imprimant une seule voie de déplacement définie pour le deuxième paquet de lamelles (4) dans une voie de déplacement (26, 32) fermée correspondante dans le plan d'extension principale des lamelles (1, 2), la composante de déplacement dirigée vers le haut de la voie de déplacement (26, 32) étant légèrement plus grande que la hauteur verticale des gradins (8) des lamelles (1, 2), le paquet de lamelles (4) mobiles étant librement suspendu à deux bras oscillants de parallélogramme (13, 14; 17; 18, 19) montés l'un derrière l'autre dans des paliers de pivotement (11, 12) disposés de manière fixe, **caractérisé en ce que** le dispositif d'entraînement (23) unique est prévu pour agir sur le paquet de lamelles (4) mobiles en contournant la suspension libre.

2. Dispositif selon la revendication 1, **caractérisé en ce que** le dispositif d'entraînement (23) unique est réalisé en tant que mécanisme à manivelle (25).

3. Dispositif selon la revendication 1 ou 2, **caractérisé en ce que** le dispositif d'entraînement (23) unique est réalisé en tant que dispositif d'entraînement à voie incurvée.

4. Dispositif selon l'une des revendications 1 à 3, **caractérisé en ce que** les deux premiers bras oscillants de parallélogramme (13, 14) sont reliés entre eux par une bielle (17) agissant sur leurs extrémités pivotantes.

5. Dispositif selon l'une des revendications 1 à 4, **caractérisé en ce que** les deux premiers bras oscillants de parallélogramme (13, 14) sont reliés aux deux deuxièmes bras oscillants de parallélogramme (18,19) par des articulations (15,16) communes.

6. Dispositif selon l'une des revendications 1 à 5, **caractérisé en ce que** le dispositif d'entraînement (23) unique est prévu pour agir sur l'un des deux deuxièmes bras oscillants de parallélogramme (18, 19) et donc indirectement sur le paquet de lamelles (4) mobiles.

7. Dispositif selon l'une des revendications 1 à 6, **caractérisé en ce que** les deux premiers et les deux deuxièmes bras oscillants de parallélogramme (13, 14 ; 18, 19) présentent la même longueur.

8. Dispositif selon l'une des revendications 1 à 7, **caractérisé en ce que** les deux deuxièmes bras oscillants de parallélogramme (18, 19) soient reliés entre eux par le paquet de lamelles (4) mobiles.

9. Dispositif selon l'une des revendications 1 à 8, **caractérisé en ce que** les gradins (8) présentent des parties de marche (9) et des parties de contre-marche (10) de même dimension et **en ce que** les paquets de lamelles (3, 4) sont disposés inclinés suivant un angle de 45°.
